# EUROPEAN PATENT APPLICATION

(11) **EP 4 227 602 A1**
(43) Date of publication of application: **16.08.2023**
(21) Application number: 21877732.4
(22) Date of filing: 07.10.2021
(51) Int. Cl.: F25B 1/00, C09K 5/04

(54) **REFRIGERANT-CONTAINING COMPOSITION, USE THEREOF, REFRIGERATOR HAVING SAME, AND METHOD FOR OPERATING SAID REFRIGERATOR**

(30) Priority: 07.10.2020 JP 2020169950
(71) Applicant: Daikin Industries, Ltd., Osaka-shi, Osaka 530-0001 (JP)
(72) Inventor: WATANABE, Yuka, Osaka-shi, Osaka 530-0001 (JP); OHKUBO, Shun, Osaka-shi, Osaka 530-0001 (JP); GOTOU, Tomoyuki, Osaka-shi, Osaka 530-0001 (JP)
(74) Representative: Hoffmann Eitle
(86) International application number: PCT/JP2021/037254
(87) International publication number: WO 2022/075433

(57) **Abstract**

Disproportionation in a refrigerant comprising HFO-1132 is suppressed. A composition comprising a refrigerant, the refrigerant comprising trans-1,2-difluoroethylene (HFO-1132(E)), 2,3,3,3-tetrafluoro-1-propene (R1234yf), and propane.

## Description

### Technical Field

The present disclosure relates to a composition comprising a refrigerant, use of the composition, a refrigerating machine having the composition, and a method for operating the refrigerating machine.

### Background Art

A working medium comprising 1,2-difluoroethylene (HFO-1132) has been proposed (PTL 1).

### Citation List

### Patent Literature

PTL 1: WO2012/157765

### Summary of Invention

### Technical Problem

An object of the present disclosure is to suppress disproportionation in a refrigerant comprising HFO-1132.

### Solution to Problem

### Item 1.

A composition comprising a refrigerant, the refrigerant comprising trans-1,2-difluoroethylene (HFO-1132(E)), 2,3,3,3-tetrafluoro-1-propene (R1234yf), and propane.

### Item 2.

The composition according to Item 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by straight lines AB, BC, CD, and DA that connect the following 4 points:
point A (95.0, 0.0, 5.0),
point B (60.0, 40.0, 0.0),
point C (0.0, 100.0, 0.0), and
point D (0.0, 0.0, 100.0),
or on the straight line AB (excluding the points A and B).

### Item 3.

The composition according to Item 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by straight lines AB, BC, CE₁, E₁F₁, and F₁A that connect the following 5 points:
point A (95.0, 0.0, 5.0),
point B (60.0, 40.0, 0.0),
point C (0.0, 100.0, 0.0),
point E₁ (0.0, 45.5, 54.5), and
point F₁ (52.4, 0.0, 47.6),
or on the straight lines AB and E₁F₁ (excluding the points A, B, E₁, and F₁).

### Item 4.

The composition according to Item 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by straight lines AB, BC, CE₂, E₂F₂, and F₂A that connect the following 5 points:
point A (95.0, 0.0, 5.0),
point B (60.0, 40.0, 0.0),
point C (0.0, 100.0, 0.0),
point E₂ (0.0, 59.4, 40.6), and
point F₂ (68.5, 0.0, 31.5),
or on the straight lines AB and E₂F₂ (excluding the points A, B, E₂, and F₂).

### Item 5.

The composition according to Item 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by straight lines AB, BC, CE₃, E₃F₃, and F₃A that connect the following 5 points:
point A (95.0, 0.0, 5.0),
point B (60.0, 40.0, 0.0),
point C (0.0, 100.0, 0.0),
point E₃ (0.0, 73.4, 26.6), and
point F₃ (84.6, 0.0. 15.4),
or on the straight lines AB and E₃F₃ (excluding the points A, B, E₃, and F₃).

### Item 6.

The composition according to Item 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by a line segment C₁D₁ and straight lines AB, BC₁, and D₁A that connect the following 4 points:
point A (95.0, 0.0, 5.0),
point B (60.0, 40.0, 0.0),
point C₁ (32.7, 67.3, 0.0), and
point D₁ (15.4, 0.0, 84.6),
or on the straight line AB and the line segment C₁D₁ (excluding the points A, B, C₁, and D₁); and
the line segment C₁D₁ is represented by coordinates (0.0095y²+0.615y+15.4, y, -0.0095y²-0.615y+84.6).

### Item 7.

The composition according to Item 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by line segments AB, BC₂, C₂D₂, and D₂A that connect the following 4 points:
point A (95.0, 0.0, 5.0),
point B (60.0, 40.0, 0.0),
point C₂ (41.7, 58.3, 0.0), and
point D₂ (37.0, 0.0, 63.0),
or on the line segments AB and C₂D₂ (excluding the points A, B, C₂, and D₂);
the line segment C₂D₂ is represented by coordinates (0.0059y²+0.7359y+37, y, -0.0059y²-0.7359y+63); and
the line segments AB, BC₂, and D₂A are all straight lines.

### Item 8.

The composition according to Item 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by line segments AB, BC₃, C₃D₃, and D₃A that connect the following 4 points:
point A (95.0, 0.0, 5.0),
point B (60.0, 40.0, 0.0),
point C₃ (50.8, 49.2, 0.0), and
point D₃ (53.0, 0.0, 47.0),
or on the line segments AB and C₃D₃ (excluding the points A, B, C₃, and D₃);
the line segment C₃D₃ is represented by coordinates (0.0039y²+0.763y+53, y, -0.0039y²-0.763y+47); and
the line segments AB, BC₃, and D₃A are all straight lines.

### Item 9.

The composition according to any one of Items 1 to 8, wherein z is 1 or more.

### Item 10.

The composition according to any one of Items 1 to 9, for use as a working fluid for a refrigerating machine, wherein the composition further comprises a refrigeration oil.

### Item 11.

The composition according to any one of Items 1 to 10, for use as an alternative refrigerant for R410A.

### Item 12.

Use of the composition according to any one of Items 1 to 10 as an alternative refrigerant for R410A.

### Item 13.

A refrigerating machine comprising the composition according to any one of Items 1 to 10 as a working fluid.

### Item 14.

A method for operating a refrigerating machine, comprising circulating the composition according to any one of Items 1 to 10 as a working fluid in a refrigerating machine.

### Advantageous Effects of Invention

In the refrigerant comprising HFO-1132 according to the present disclosure, disproportionation of HFO-1132 is suppressed.

### Description of Embodiments

HFO-1132 is chemically unstable due to its unsaturated bond and may be at risk of disproportionation. As a result of extensive research to achieve the above object, the present inventors found that a mixed refrigerant comprising HFO-1132(E), R1234yf, and propane at a specific mixing ratio has the above properties.

The present disclosure has been completed as a result of further research based on this finding. The present disclosure includes the following embodiments.

### Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC).

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, a refrigerant having a "lower flammability" means that it is determined to be "Class 2L" according to the US ANSI/ASHRAE Standard 34-2013.

### 1. Refrigerant

### 1.1 Refrigerant Component

The refrigerant according to the present disclosure is a mixed refrigerant comprising HFO-1132(E), R1234yf, and propane.

When the refrigerant according to the present disclosure satisfies the following requirements, disproportionation of HFO-1132(E) is suppressed.

When the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by straight lines AB, BC, CD, and DA that connect the following 4 points:
point A (95.0, 0.0, 5.0),
point B (60.0, 40.0, 0.0),
point C (0.0, 100.0, 0.0), and
point D (0.0, 0.0, 100.0),
or on the straight line AB (excluding the points A and B).

When the refrigerant according to the present disclosure satisfies the following requirements, the combustion heat is 30 kJ/kg or less.

The coordinates (x,y,z) are within the range of a figure surrounded by straight lines AB, BC, CE₁, E₁F₁, and F₁A that connect the following 5 points:
point A (95.0, 0.0, 5.0),
point B (60.0, 40.0, 0.0),
point C (0.0, 100.0, 0.0),
point E₁ (0.0, 45.5, 54.5), and
point F₁ (52.4, 0.0, 47.6),
or on the straight lines AB and E₁F₁ (excluding the points A, B, E₁, and F₁).

When the refrigerant according to the present disclosure satisfies the following requirements, the combustion heat is 25 kJ/kg or less.

The coordinates (x,y,z) are within the range of a figure surrounded by straight lines AB, BC, CE₂, E₂F₂, and F₂A that connect the following 5 points:
point A (95.0, 0.0, 5.0),
point B (60.0, 40.0, 0.0),
point C (0.0, 100.0, 0.0),
point E₂ (0.0, 59.4, 40.6), and
point F₂ (68.5, 0.0, 31.5),
or on the straight lines E₂F₂ and F₂B (excluding the points B, E₂, and F₂).

When the refrigerant according to the present disclosure satisfies the following requirements, the combustion heat is 20 kJ/kg or less.

The coordinates (x,y,z) are within the range of a figure surrounded by straight lines AB, BC, CE₃, E₃F₃, and F₃A that connect the following 5 points:
point A (95.0, 0.0, 5.0),
point B (60.0, 40.0, 0.0),
point C (0.0, 100.0, 0.0),
point E₃ (0.0, 73.4, 26.6), and
point F₃ (84.6, 0.0. 15.4),
or on the straight lines E₃F₃ and F₃B (excluding the points B, E₃, and F₃).

When the refrigerant according to the present disclosure satisfies the following requirements, the refrigerating capacity ratio is 600 or more relative to that of R410A.

The coordinates (x,y,z) are within the range of a figure surrounded by a line segment C₁D₁ and straight lines AB, BC₁, and D₁A that connect the following 4 points:
point A (95.0, 0.0, 5.0),
point B (60.0, 40.0, 0.0),
point C₁ (32.7, 67.3, 0.0), and
point D₁ (15.4, 0.0, 84.6),
or on the straight line AB and the line segment C₁D₁ (excluding the points A, B, C₁, and D₁);
the line segment C₁D₁ is represented by coordinates (0.0095y²+0.615y+15.4, y, -0.0095y²-0.615y+84.6); and
the line segments AB, BC₁, and D₁A are all straight lines.

When the refrigerant according to the present disclosure satisfies the following requirements, the refrigerating capacity ratio is 650 or more relative to that of R410A.

The coordinates (x,y,z) are within the range of a figure surrounded by line segments AB, BC₂, C₂D₂, and D₂A that connect the following 4 points:
point A (95.0, 0.0, 5.0),
point B (60.0, 40.0, 0.0),
point C₂ (41.7, 58.3, 0.0), and
point D₂ (37.0, 0.0, 63.0),
or on the line segments AB and C₂D₂ (excluding the points A, B, C₂, and D₂);
the line segment C₂D₂ is represented by coordinates (0.0059y²+0.7359y+37, y, -0.0059y²-0.7359y+63); and
the line segments AB, BC₂, and D₂A are all straight lines.

When the refrigerant according to the present disclosure satisfies the following requirements, the refrigerating capacity ratio is 700 or more relative to that of R410A.

The coordinates (x,y,z) are within the range of a figure surrounded by line segments AB, BC₃, C₃D₃, and D₃A that connect the following 4 points:
point A (95.0, 0.0, 5.0),
point B (60.0, 40.0, 0.0),
point C₃ (50.8, 49.2, 0.0), and
point D₃ (53.0, 0.0, 47.0),
or on the line segments AB and C₃D₃ (excluding the points A, B, C₃, and D₃);
the line segment C₃D₃ is represented by coordinates (0.0039y²+0.763y+53, y, -0.0039y²-0.763y+47); and
the line segments AB, BC₃, and D₃A are all straight lines.

The refrigerant according to the present disclosure is easily dissolved in a high-boiling-point refrigeration oil when z is 1 or more. Examples of high-boiling-point refrigeration oils include mineral oils used as refrigeration oils for R22. In this respect, z is preferably 1 or more, more preferably 2 or more, and even more preferably 3 or more.

The refrigerant according to the present disclosure preferably comprises HFO-1132(E), R1234yf, and propane each in an amount of 99 mass% or less, preferably 95 mass% or less, more preferably 80 mass% or less, and even more preferably 70 mass% or less, based on the entire refrigerant.

The refrigerant according to the present disclosure preferably comprises HFO-1132(E), R1234yf, and propane each in an amount of 1 mass% or more, more preferably 2 mass% or more, and even more preferably 3 mass% or more, based on the entire refrigerant.

The refrigerant according to the present disclosure may further comprise other additional refrigerants in addition to HFO-1132(E), R1234yf, and propane, as long as the above properties and effects are not impaired. In this respect, the refrigerant according to the present disclosure preferably comprises HFO-1132(E), R1234yf, and propane in a total amount of 99.5 mass% or more, more preferably 99.75 mass% or more, even more preferably 99.9 mass% or more, still even more preferably 99.99 mass% or more, and most preferably 99.999 mass% or more, based on the entire refrigerant. The refrigerant according to the present disclosure may substantially consist of HFO-1132(E), R1234yf, and propane, or may consist of HFO-1132(E), R1234yf, and propane. When the refrigerant according to the present disclosure substantially consists of HFO-1132(E), R1234yf, and propane, it may further contain, in addition to HFO-1132(E), R1234yf, and propane, impurities inevitably mixed in the production process of these compounds.

Such additional refrigerants are not limited, and can be selected from a wide range of refrigerants. The mixed refrigerant may comprise a single additional refrigerant, or two or more additional refrigerants.

### 1.2. Use

The refrigerant according to the present disclosure can be preferably used as a working fluid in a refrigerating machine.

The composition according to the present disclosure is suitable for use as an alternative refrigerant for R410A and R404A.

### 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

### 2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃Cl)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1,1,1-trifluoroethane, CF₃CH₃)
HFC-143 (1,1,2-trifluoroethane, CHF₂CH₂F)
HFC-152a (1,1-difluoroethane, CHF₂CH₃)
HFC-152 (1,2-difluoroethane, CH₂FCH₂F)
HFC-161 (fluoroethane, CH₃CH₂F)
HFC-245fa (1,1,1,3,3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The refrigerant composition according to the present disclosure may contain tracers at a total concentration of about 10 parts per million by weight (ppm) or more and about 1000 ppm or less, based on the entire refrigerant. The refrigerant composition according to the present disclosure preferably contains tracers at a total concentration of about 30 ppm or more, and more preferably about 50 ppm or more, based on the entire refrigerant. The refrigerant composition according to the present disclosure preferably contains tracers at a total concentration of about 500 ppm or less, and more preferably about 300 ppm or less, based on the entire refrigerant.

### 2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 mass% or more, and more preferably 0.05 mass% or more, based on the entire refrigerant. Generally, the content of the stabilizer is preferably 5 mass% or less, and more preferably 2 mass% or less, based on the entire refrigerant.

### 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 mass% or more, and more preferably 0.05 mass% or more, based on the entire refrigerant. Generally, the content of the polymerization inhibitor is preferably 5 mass% or less, and more preferably mass% or less, based on the entire refrigerant.

### 3. Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 mass% or more and 50 mass% or less of refrigeration oil.

### 3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 cSt or more at 40°C is preferable from the standpoint of lubrication. A refrigeration oil with a kinematic viscosity of 400 cSt or less at 40°C is preferable from the standpoint of lubrication.

The refrigeration oil-containing working fluid according to the present disclosure may further optionally contain at least one additive. Examples of additives include compatibilizing agents described below.

### 3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

The embodiments are described above; however, it will be understood that various changes in forms and details can be made without departing from the spirit and scope of the claims.

### Examples

The present disclosure is described in more detail below with reference to Examples. However, the present disclosure is not limited to the Examples.

Mixed refrigerants were prepared by mixing HFO-1132(E), R1234yf, and propane at mass% based on their sum shown in Tables 1 and 2.

The COP and refrigerating capacity ratios of each of these mixed refrigerants relative to R410 or R404A were determined. The calculation conditions were as follows.
Evaporating temperature: 5°C
Condensation temperature: 45°C
Superheating temperature: 1 K
Subcooling temperature: 5 K
E_{comp} (compressive modulus): 0.7 kWh

Tables 1 and 2 show these values together with the GWP of each mixed refrigerant.

The combustion heat was calculated from the standard enthalpy of formation of HFO-1132(E), HFO-1234yf, propane, CO2, HF, COF2, and H2O, and was determined as the standard enthalpy of combustion.

The present disclosure is described in more detail based on the Examples and Comparative Examples; however, the present disclosure is not limited thereto. A person skilled in the art can make various changes, modifications, and alterations without departing from the scope of the present disclosure.

### Experimental System of Disproportionation Reaction

Disproportionation was evaluated using the equipment complying with the method A, which is recommended as equipment for measuring the combustion range of gas mixtures containing halogens in the individual notices of the High Pressure Gas Safety Act.

Specifically, the refrigerant components shown below were enclosed in a spherical pressure-resistant container with an internal volume of 50 cm³ and a predetermined temperature controlled from the outside, up to a predetermined pressure. Then, about 30 J of energy was applied by fusing a platinum wire installed inside the container. The presence of a disproportionation reaction was confirmed by measuring the temperature and pressure changes that occurred in the pressure-resistant container after energy application. It was determined that the disproportionation reaction occurred when the pressure difference was 1 MPaG or more and the temperature difference was 10°C or more before and after ignition.

In the above experimental system, R1132(E), propane, and R1234yf were introduced into the pressure-resistant container from a gas cylinder. The internal pressure was 1.0 MPa and the internal temperature was about 100°C. In the present disclosure, the pressure is gauge pressure unless otherwise specified.

As a result of the above test, it was confirmed that the internal pressure was 10 MPa or more and the internal temperature was about 100°C or more in Comparative Examples 1 to 9. Then, after the internal pressure and temperature had sufficiently decreased, the inside of the pressure-resistant container was checked, and the generation of a considerable amount of soot was observed. In Examples 1 to 58, it was confirmed that the pressure difference was less than 1 MPa and the temperature difference was less than 10°C.

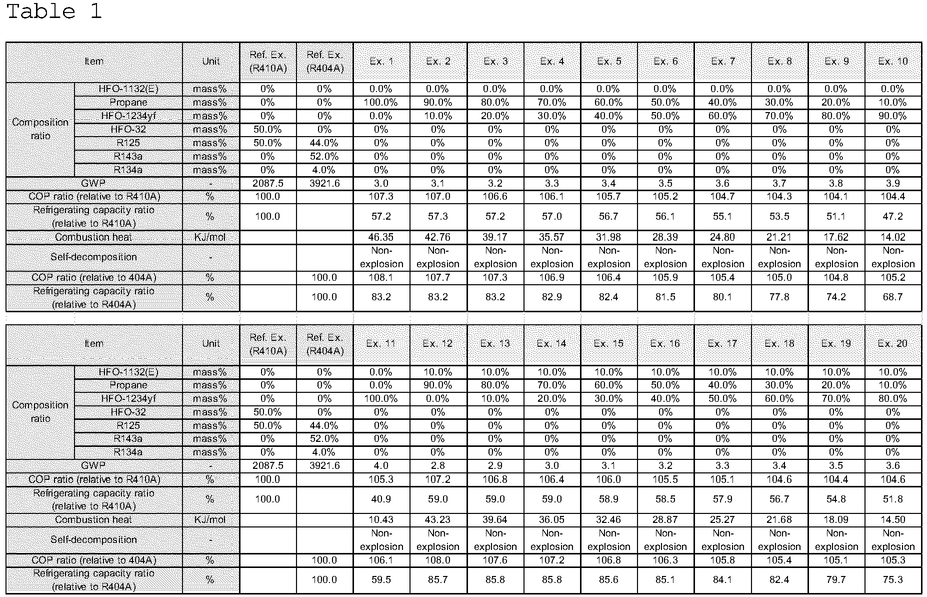

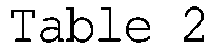

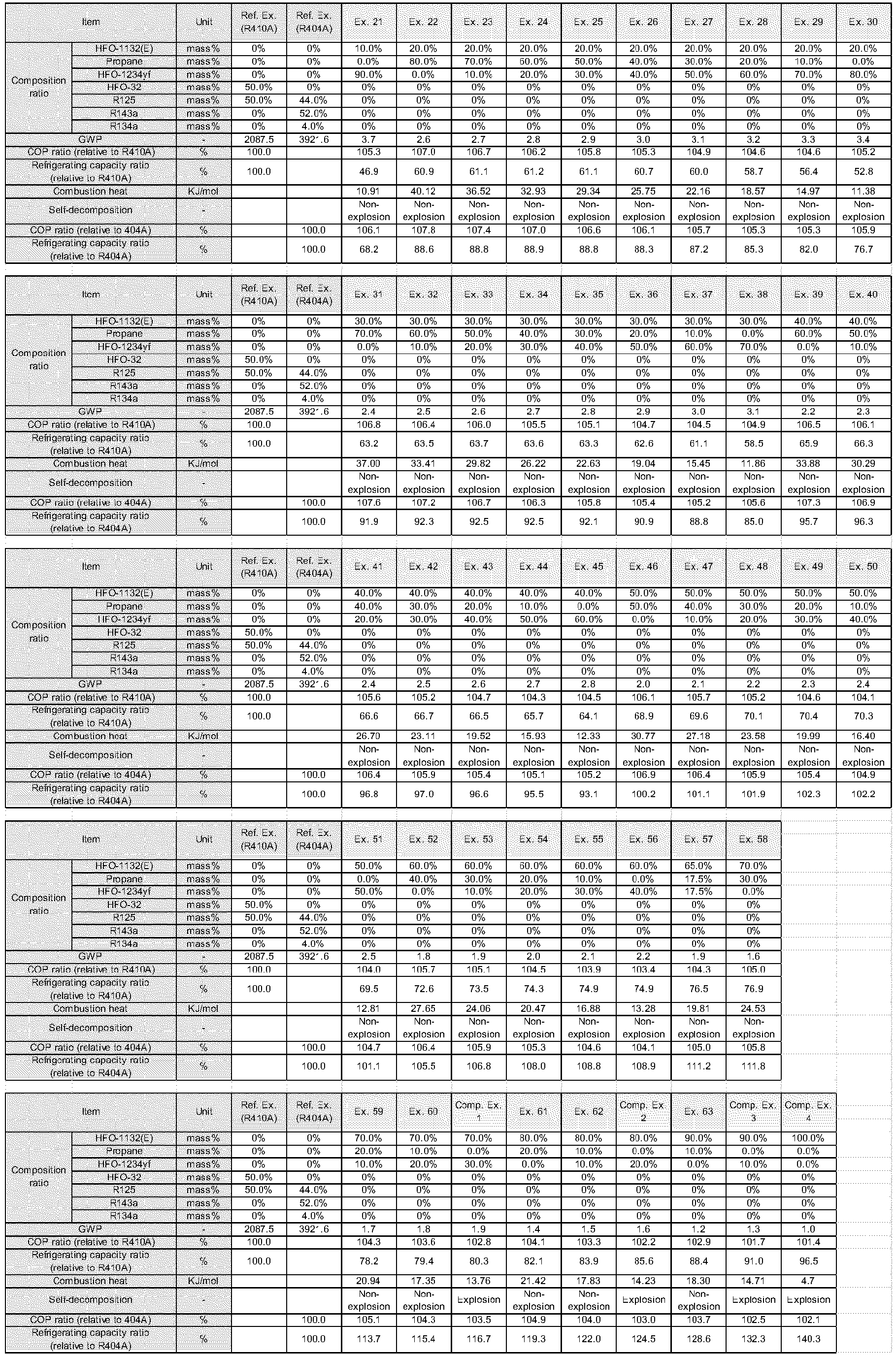

These results demonstrate that when the refrigerant according to the present disclosure satisfies the following requirements, disproportionation of HFO-1132(E) is suppressed.

When the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by straight lines AB, BC, CD, and DA that connect the following 4 points:
point A (95.0, 0.0, 5.0),
point B (60.0, 40.0, 0.0),
point C (0.0, 100.0, 0.0), and
point D (0.0, 0.0, 100.0),
or on the straight line AB (excluding the points A and B).

These results demonstrate that when the refrigerant according to the present disclosure satisfies the following requirements, the combustion heat is 30 kJ/kg or less.

The coordinates (x,y,z) are within the range of a figure surrounded by straight lines AB, BC, CE₁, E₁F₁, and F₁A that connect the following 5 points:
point A (95.0, 0.0, 5.0),
point B (60.0, 40.0, 0.0),
point C (0.0, 100.0, 0.0),
point E₁ (0.0, 45.5, 54.5), and
point F₁ (52.4, 0.0, 47.6),
or on the straight lines AB and E₁F₁ (excluding the points A, B, E₁, and F₁).

These results demonstrate that when the refrigerant according to the present disclosure satisfies the following requirements, the combustion heat is 25 kJ/kg or less.

The coordinates (x,y,z) are within the range of a figure surrounded by straight lines AB, BC, CE₂, E₂F₂, and F₂A that connect the following 5 points:
point A (95.0, 0.0, 5.0),
point B (60.0, 40.0, 0.0),
point C (0.0, 100.0, 0.0),
point E₂ (0.0, 59.4, 40.6), and
point F₂ (68.5, 0.0, 31.5),
or on the straight lines E₂F₂ and F₂B (excluding the points B, E₂, and F₂).

These results demonstrate that when the refrigerant according to the present disclosure satisfies the following requirements, the combustion heat is 20 kJ/kg or less.

The coordinates (x,y,z) are within the range of a figure surrounded by straight lines AB, BC, CE₃, E₃F₃, and F₃A that connect the following 5 points:
point A (95.0, 0.0, 5.0),
point B (60.0, 40.0, 0.0),
point C (0.0, 100.0, 0.0),
point E₃ (0.0, 73.4, 26.6), and
point F₃ (84.6, 0.0. 15.4),
or on the straight lines E₃F₃ and F₃B (excluding the points B, E₂, and F₃).

These results demonstrate that when the refrigerant according to the present disclosure satisfies the following requirements, the refrigerating capacity ratio is 600 or more relative to that of R410A.

The coordinates (x,y,z) are within the range of a figure surrounded by a line segment C₁D₁ and straight lines AB, BC₁, and D₁A that connect the following 4 points:
point A (95.0, 0.0, 5.0),
point B (60.0, 40.0, 0.0),
point C₁ (32.7, 67.3, 0.0), and
point D₁ (15.4, 0.0, 84.6),
or on the straight line AB and the line segment C₁D₁ (excluding
the points A, B, C₁, and D₁);
the line segment C₁D₁ is represented by coordinates (0.0095y²+0.615y+15.4, y, -0.0095y²-0.615y+84.6); and
the line segments AB, BC₁, and D₁A are all straight lines.

These results demonstrate that when the refrigerant according to the present disclosure satisfies the following requirements, the refrigerating capacity ratio is 650 or more relative to that of R410A.

The coordinates (x,y,z) are within the range of a figure surrounded by line segments AB, BC₂, C₂D₂, and D₂A that connect the following 4 points:
point A (95.0, 0.0, 5.0),
point B (60.0, 40.0, 0.0),
point C₂ (41.7, 58.3, 0.0), and
point D₂ (37.0, 0.0, 63.0),
or on the line segments AB and C₂D₂ (excluding the points A, B, C₂, and D₂);
the line segment C₂D₂ is represented by coordinates (0.0059y²+0.7359y+37, y, -0.0059y²-0.7359y+63); and
the line segments AB, BC₂, and D₂A are all straight lines.

These results demonstrate that when the refrigerant according to the present disclosure satisfies the following requirements, the refrigerating capacity ratio is 700 or more relative to that of R410A.

The coordinates (x,y,z) are within the range of a figure surrounded by line segments AB, BC₃, C₃D₃, and D₃A that connect the following 4 points:
point A (95.0, 0.0, 5.0),
point B (60.0, 40.0, 0.0),
point C₃ (50.8, 49.2, 0.0), and
point D₃ (53.0, 0.0, 47.0),
or on the line segments AB and C₃D₃ (excluding the points A, B, C₃, and D₃);
the line segment C₃D₃ is represented by coordinates (0.0039y²+0.763y+53, y, -0.0039y²-0.763y+47); and
the line segments AB, BC₃, and D₃A are all straight lines.

## Claims

1. A composition comprising a refrigerant, the refrigerant comprising trans-1,2-difluoroethylene (HFO-1132(E)), 2,3,3,3-tetrafluoro-1-propene (R1234yf), and propane.

2. The composition according to claim 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by straight lines AB, BC, CD, and DA that connect the following 4 points:
point A (95.0, 0.0, 5.0),
point B (60.0, 40.0, 0.0),
point C (0.0, 100.0, 0.0), and
point D (0.0, 0.0, 100.0),
or on the straight line AB (excluding the points A and B).

3. The composition according to claim 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by straight lines AB, BC, CE₁, E₁F₁, and F₁A that connect the following 5 points:
point A (95.0, 0.0, 5.0),
point B (60.0, 40.0, 0.0),
point C (0.0, 100.0, 0.0),
point E₁ (0.0, 45.5, 54.5), and
point F₁ (52.4, 0.0, 47.6),
or on the straight lines AB and E₁F₁ (excluding the points A, B, E₁, and F₁).

4. The composition according to claim 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by straight lines AB, BC, CE₂, E₂F₂, and F₂A that connect the following 5 points:
point A (95.0, 0.0, 5.0),
point B (60.0, 40.0, 0.0),
point C (0.0, 100.0, 0.0),
point E₂ (0.0, 59.4, 40.6), and
point F₂ (68.5, 0.0, 31.5),
or on the straight lines E₂F₂ and F₂B (excluding the points B, E₂, and F₂).

5. The composition according to claim 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by straight lines AB, BC, CE₃, E₃F₃, and F₃A that connect the following 5 points:
point A (95.0, 0.0, 5.0),
point B (60.0, 40.0, 0.0),
point C (0.0, 100.0, 0.0),
point E₃ (0.0, 73.4, 26.6), and
point F₃ (84.6, 0.0. 15.4),
or on the straight lines E₃F₃ and F₃B (excluding the points B, E₃, and F₃).

6. The composition according to claim 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by a line segment C₁D₁ and straight lines AB, BC₁, and D₁A that connect the following 4 points:
point A (95.0, 0.0, 5.0),
point B (60.0, 40.0, 0.0),
point C₁ (32.7, 67.3, 0.0), and
point D₁ (15.4, 0.0, 84.6),
or on the straight line AB and the line segment C₁D₁ (excluding the points A, B, C₁, and D₁); and
the line segment C₁D₁ is represented by coordinates (0.0095y²+0.615y+15.4, y, -0.0095y²-0.615y+84.6).

7. The composition according to claim 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by line segments AB, BC₂, C₂D₂, and D₂A that connect the following 4 points:
point A (95.0, 0.0, 5.0),
point B (60.0, 40.0, 0.0),
point C₂ (41.7, 58.3, 0.0), and
point D₂ (37.0, 0.0, 63.0),
or on the line segments AB and C₂D₂ (excluding the points A, B, C₂, and D₂);
the line segment C₂D₂ is represented by coordinates (0.0059y²+0.7359y+37, y, -0.0059y²-0.7359y+63); and
the line segments AB, BC₂, and D₂A are all straight lines.

8. The composition according to claim 1, wherein in the refrigerant, when the mass% of HFO-1132(E), R1234yf, and propane based on their sum is respectively represented by x, y, and z, coordinates (x,y,z) in a ternary composition diagram in which the sum of HFO-1132(E), R1234yf, and propane is 100 mass% are within the range of a figure surrounded by line segments AB, BC₃, C₃D₃, and D₃A that connect the following 4 points:
point A (95.0, 0.0, 5.0),
point B (60.0, 40.0, 0.0),
point C₃ (50.8, 49.2, 0.0), and
point D₃ (53.0, 0.0, 47.0),
or on the line segments AB and C₃D₃ (excluding the points A, B, C₃, and D₃);
the line segment C₃D₃ is represented by coordinates (0.0039y²+0.763y+53, y, -0.0039y²-0.763y+47); and
the line segments AB, BC₃, and D₃A are all straight lines.

9. The composition according to any one of claims 1 to 8, wherein z is 1 or more.

10. The composition according to any one of claims 1 to 9, for use as a working fluid for a refrigerating machine, wherein the composition further comprises a refrigeration oil.

11. The composition according to any one of claims 1 to 10, for use as an alternative refrigerant for R410A.

12. Use of the composition according to any one of claims 1 to 10 as an alternative refrigerant for R410A.

13. A refrigerating machine comprising the composition according to any one of claims 1 to 10 as a working fluid.

14. A method for operating a refrigerating machine, comprising circulating the composition according to any one of claims 1 to 10 as a working fluid in a refrigerating machine.
